# EUROPEAN PATENT APPLICATION

(11) **EP 2 568 355 A2**
(43) Date of publication of application: **13.03.2013**
(21) Application number: 12183757.9
(22) Date of filing: 10.09.2012
(51) Int. Cl.: G06F 3/01, H04N 13/02, H04N 13/04

(54) **Combined stereo camera and stereo display interaction**

(30) Priority: 12.09.2011 US 201113230680
(71) Applicant: Palo Alto Research Center Incorporated, Palo Alto, California 94304 (US)
(72) Inventor: Roberts, Michael, Los Gatos, CA California 95033 (US); Zafrulla, Zahoor, Atlanta, GA Georgia 30318 (US); Chu, Maurice, Burlingame, CA California 94010 (US)
(74) Representative: Skone James, Robert Edmund

(57) **Abstract**

One embodiment of the present invention provides a system that facilitates interaction between a stereo image-capturing device (110) and a three-dimensional (3D) display (120). The system comprises a stereo image-capturing device (110), a plurality of trackers (312-318), an event generator, an event processor, and a 3D display (320). During operation, the stereo image-capturing device captures (410) images of a user. The plurality of trackers track (414) movements of the user based on the captured images. Next, the event generator generates an event stream (416) associated with the user movements, before the event processor in a virtual-world client maps (418) the event stream to state changes in the virtual world. The 3D display then displays (420) an augmented reality with the virtual world.

## Description

The present disclosure relates to a system and technique for facilitating interaction with objects via a machine vision interface in a virtual world displayed on a large stereo display in conjunction with a virtual world server system, which can stream changes to the virtual world's internal model to a variety of devices, including augmented reality devices.

During conventional assisted servicing of a complicated device, an expert technician is physically collocated with a novice to explain and demonstrate by physically manipulating the device. However, this approach to training or assisting the novice can be expensive and time-consuming because the expert technician often has to travel to a remote location where the novice and the device are located.

In principle, remote interaction between the expert technician and the novice is a potential solution to this problem. However, the information that can be exchanged using existing communication techniques is often inadequate for such remotely assisted servicing. For example, during a conference call audio, video, and text or graphical content are typically exchanged by the participants, but three-dimensional spatial relationship information, such as the spatial interrelationship between components in the device (e.g., how the components are assembled) is often unavailable. This is a problem because the expert technician does not have the ability to point and physically manipulate the device during a remote servicing session. Furthermore, the actions of the novice are not readily apparent to the expert technician unless the novice is able to effectively communicate his actions. Typically, relying on the novice to verbally explain his actions to the expert technician and vice versa is not effective because there is a significant knowledge gap between the novice and the expert technician. Consequently, it is often difficult for the expert technician and the novice to communicate regarding how to remotely perform servicing tasks.

One embodiment of the present invention provides a system that facilitates interaction between a stereo image-capturing device and a three-dimensional (3D) display. The system comprises a stereo image-capturing device, a plurality of trackers, an event generator, an event processor, and a 3D display. During operation, the stereo image-capturing device captures images of a user and one or more objects surrounding the user. The plurality of trackers track movements of the user based on the captured images. Next, a plurality of event generators generate an event stream associated with the user movements and/or movements of one or more objects surrounding the user, before the event processor in a virtual-world client maps the event stream to state changes in the virtual world. The 3D display then displays the virtual world.

In a variation of this embodiment, the stereo image-capturing device is a depth camera or a stereo camera capable of generating disparity maps for depth calculation.

In a variation of this embodiment, the system further comprises a calibration module configured to map coordinates of a point in the captured images to coordinates of a real-world point.

In a variation of this embodiment, the plurality of trackers include one or more of: an eye tracker, a head tracker, a hand tracker, and a body tracker.

In a variation of this embodiment, the event processor allows the user to manipulate an object corresponding to the user movements.

In a further variation, the 3D display displays the object in response to user movements.

In a variation of this embodiment, the event processor receives a second event stream for manipulating an object.

In a further variation, changes to the virtual world model made by the event processor can be distributed to a number of coupled augmented or virtual reality systems

### BRIEF DESCRIPTION OF THE FIGURES

FIG. 1 is a block diagram illustrating an exemplary virtual reality system combined with a machine vision interface in accordance with an embodiment of the present disclosure.

FIG. 2 is a block diagram illustrating an exemplary virtual-augmented reality system in accordance with an embodiment of the present disclosure.

FIG. 3 is a block diagram illustrating a computer system facilitating interaction with objects via a machine vision interface in a virtual world displayed on a large stereo display in accordance with an embodiment of the present disclosure.

FIG. 4 is a flow chart illustrating a method for facilitating interaction with objects via a machine vision interface in a virtual world displayed on a large stereo display in accordance with an embodiment of the present disclosure.

FIG. 5 is a block diagram illustrating a computer system that facilitates augmented-reality collaboration, in accordance with an embodiment of the present disclosure.

Note that like reference numerals refer to corresponding parts throughout the drawings. Moreover, multiple instances of the same part are designated by a common prefix separated from an instance number by a dash.

### DETAILED DESCRIPTION

Embodiments of the present invention solve the issue of combining a machine vision interface with an augmented reality system, so that users who are less-familiar with computer equipment can interact with a complex virtual space. In remote servicing applications, it is useful to enable remote users to interact with local users via an augmented reality system which incorporates machine vision interfaces. By combining stereo cameras and stereo displays, remote users may directly touch and manipulate objects which appear to float out of the stereo displays placed in front of them. Remote users can also experience the interactions either via another connected virtual reality system, or via an augmented reality system which overlays information from the virtual world over live video.

Embodiments of a system, a method, and a computer-program product (e.g., software) for facilitating interaction between a stereo image-capturing device and a three-dimensional (3D) display are described. The system comprises a stereo image-capturing device, a plurality of trackers, an event generator, an event processor, an application with an internal representation of the state of the scene and a 3D display. During operation, the stereo image-capturing device captures images of a user. The plurality of trackers track movements of the user and/or objects in the scene based on the captured images. Next, the event generator generates an event stream associated with the user movements, before the event processor in a virtual-world client maps the event stream to state changes in the virtual world application's world model. The 3D display then displays the application's world model.

In the discussion that follows, a virtual environment (which is also referred to as a 'virtual world' or 'virtual reality' application) should be understood to include an artificial reality that projects a user into a space (such as a three-dimensional space) generated by a computer. Furthermore, an augmented reality application should be understood to include a live or indirect view of a physical environment whose elements are augmented by superimposed computer-generated information (such as supplemental information, an image or information associated with a virtual reality application's world model).

### Overview

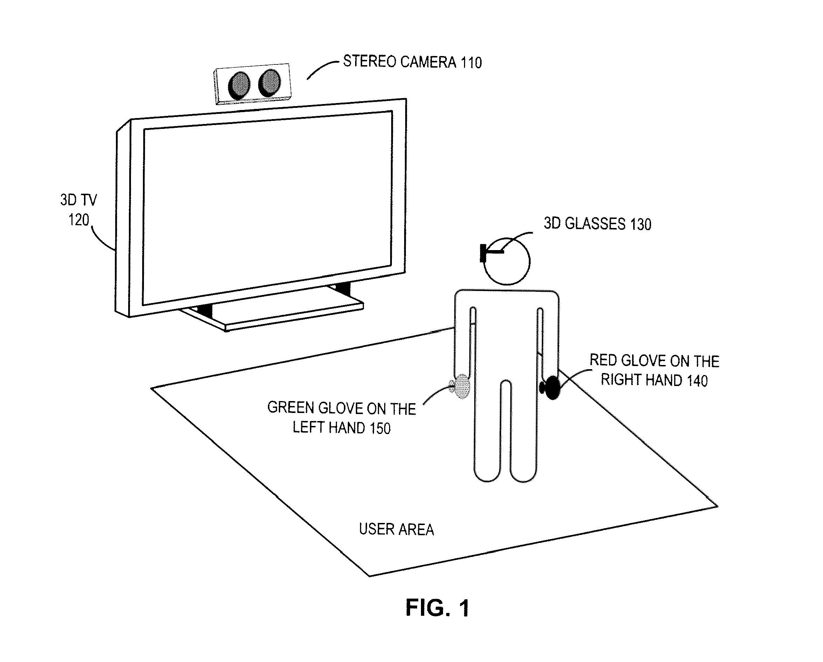

We now discuss embodiments of the system. FIG. 1 presents a block diagram illustrating an exemplary virtual reality system combined with a machine vision interface in accordance with an embodiment of the present disclosure. As shown in FIG. 1, the machine vision interface perceives a user standing (or sitting) in front of a stereo camera 110 placed on top of a 3D display 120. The user can wear a pair of 3D glasses 130, a red glove 140 on his right hand, and a green glove 150 on his left hand. The virtual reality system also incorporates a number of tracking modules, each of which is capable of tracking the user's movements with help from stereo camera 110, 3D glasses 130, red glove 140, and green glove 150. For example, the system can track the user's hands by tracking the colored gloves, and the user's eyes by tracking the outline of the 3D glasses. Additional tracking modules can recognize hand shapes and gestures made by the user, as well as movements of different parts of the user's body. The system may also approximate the user's gaze via an eye tracker. These movements and gestures are then encoded into an event stream, which is fed to the event processor. The event processor modifies the world model of the virtual reality system.

In one embodiment, the virtual reality system comprises several key parts: a world model, which represents the state of the object(s) in the physical world being worked on, and a subsystem for distributing changes to the state of the world model to a number of virtual world or augmented reality clients coupled to a server. The subsystem for distributing changes translates user gestures made in the virtual world clients into commands suitable for transforming the state of the world model to represent the user gestures. The virtual world client, which interfaces with the virtual world server, keeps its state synchronized with the world model maintained by the server, and displays the world model using stereo rendering technology on a large 3D display in front of the user. The user watches the world model rendered from different viewpoints in each eye through the 3D glasses, having the illusion that the object is floating in front of him.

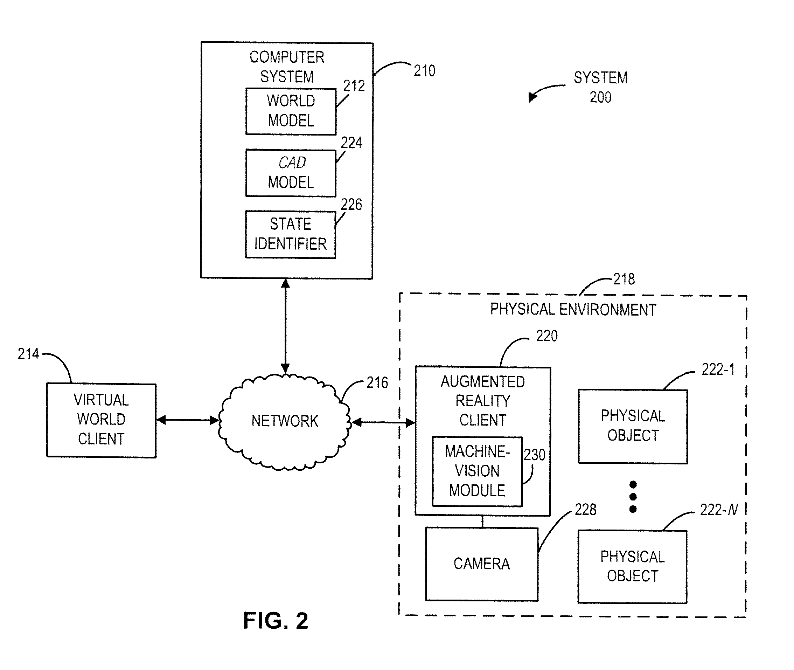

FIG. 2 presents a block diagram illustrating an exemplary virtual-augmented reality system 200 in accordance with an embodiment of the present disclosure. In this system, users of a virtual world client 214 and an augmented reality client 220 at a remote location interact, via network 216, though a shared framework. Server system 210 maintains a world model 212 that represents the state of one or more computer objects that are associated with physical objects 222-1 to 222-N in physical environment 218 that are being modified by one or more users. Server system 210 shares in real time any changes to the state of the world model associated with actions of the one or more users of augmented reality client 220 and/or the one or more other users of virtual world client 214, thereby maintaining the dynamic spatial association or 'awareness' between the augmented reality application and the virtual reality application.

Augmented reality client 220 can capture real-time video using a camera 228 and process video images using a machine-vision module 230. Augmented reality client 220 can further display information or images associated with world model 212 along with the captured video. For example, machine-vision module 230 may work in conjunction with a computer-aided-design (*CAD*) model 224 of physical objects 122-1 to 122-N to associate image features with corresponding features on *CAD* model 124. Machine-vision module 230 can relay the scene geometry to *CAD* model 124.

A user can interact with augmented reality client 220 by selecting a displayed object or changing the view to a particular area of physical environment 218. This information is relayed to server system 210, which updates world model 212 as needed, and distributes instructions that reflect any changes to both virtual world client 214 and augmented reality client 220. Thus, changes to the state of the objects in world model 212 may be received from virtual world client 214 and/or augmented reality client 220. A state identifier 226 at server system 210 determines the change to the state of the one or more objects.

Thus, the multi-user virtual world server system maintains the dynamic spatial association between the augmented reality application and the virtual reality application so that the users of virtual world client 214 and augmented reality client 220 can interact with their respective environments and with each other. Furthermore, physical objects 222-1 to 222-N can include a complicated object with multiple inter-related components or components that have a spatial relationship with each other. By interacting with this complicated object, the users can transition interrelated components in world model 212 into an exploded view. This capability may allow users of system 200 to collaboratively or interactively modify or generate content in applications, such as an online encyclopedia, an online user manual, remote maintenance or servicing, remote training, and/or remote surgery.

### Stereo Camera and Display Interaction

Embodiments of the present invention provide a system that facilitates interaction between a stereo image-capturing device and a 3D display in a virtual-augmented reality environment. The system includes a number of tracking modules, each of which is capable of tracking movements of different parts of a user's body. These movements are encoded into an event stream which is then fed to a virtual world client. An event processing module, embedded in the virtual world client, receives the event stream and makes modifications to the local virtual world state based upon the received event stream. The modifications may include adjusting the viewpoint of the user relative to the virtual world model, and selecting, dragging and rotating objects. Note that an individual event corresponding to a particular user movement in the event stream may or may not result in a state change of the world model. The event processing module analyzes the incoming event stream received from tracking modules, and identifies the events that indeed affect the state of the world model, which are translated into state-changing commands sent to the virtual world server.

It is important that the position of the user's body and the gestures made by the user's hands in front of the camera are accurately measured and reproduced. A sophisticated machine vision module can be used to achieve the accuracy. In one embodiment, the machine vision module can perform one of more of the following:
- use of a camera lens with a wide focal length;
- accurate calibration of the space and position in front of the display to ensure that users can interact with 3D virtual models with high fidelity;
- real-time operation to ensure that the incoming visual information is quickly processed with minimal lag; and
- accurate recognition of hand-shapes for gestures, which may vary across the field of view, as seen from different perspectives by the camera.

In one embodiment, the stereo camera is capable of generating disparity maps, which can be analyzed to calculate depth information, along with directly captured video images that provide x-y coordinates. In general, a stereo camera provides adequate input for the system to map the image space to real space and recognize different parts of the user's body. In one embodiment, a separate calibration module performs the initial mapping of points in the captured images to real-world points. During operation, a checkerboard test image is placed at specific locations in front of the stereo camera. The calibration module then analyzes the captured image with marked locations from the stereo camera and performs a least-squares method to determine the optimal mapping transformation from image space to real-world space. Next, a set of trackers and gesture recognizers are configured to recognize and track user movements and state changes of the objects manipulated by the user based on the calibrated position information. Once a movement is recognized, an event generator generates a high-level event describing the movement and communicates the event to the virtual world client. Subsequently, a virtual space mapping module maps from the real-world space of the event generator to the virtual space in which virtual objects exist for final display.

In some embodiments, the output from the set of trackers is combined by a model combiner. The model combiner can include one or more models of the user and/or the user's surroundings (such as a room that contains the user and other objects), for example an IK model or a skeleton. The combiner can also apply kinematics models, such as forward and inverse kinematics models, to the output of the trackers to detect user-objects interactions, and optimize the detection results for particular applications. The model combiner can be configured by a set of predefined rules or through an external interface. For example, if a user-objects interaction only involves the user's hands and upper body movements, the model combiner can be configured with a model of the human upper body. The generated event stream is therefore application specific and can be processed by the application more efficiently.

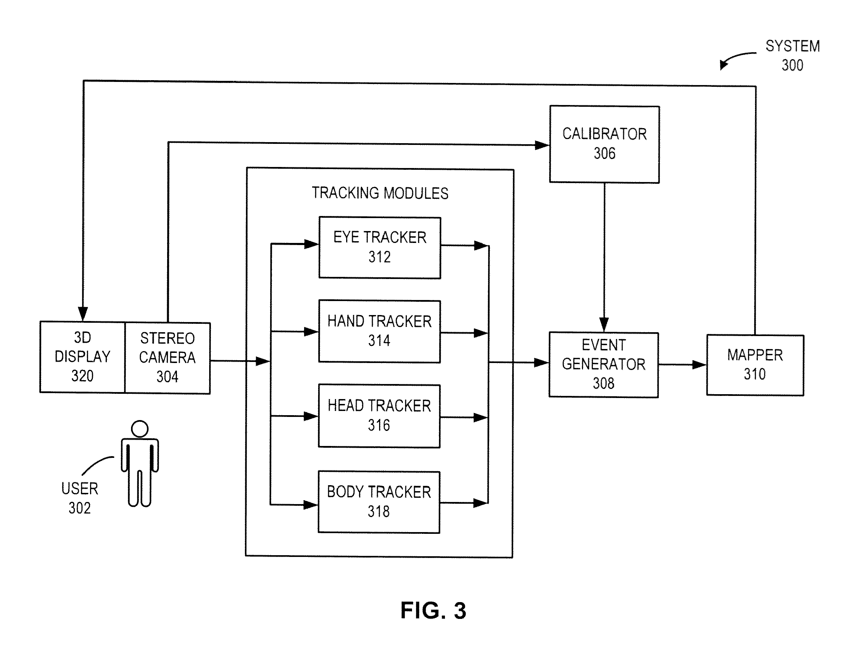

FIG. 3 is a block diagram illustrating a computer system 300 facilitating interaction with objects via a machine vision interface in a virtual world displayed on a large stereo display in accordance with an embodiment of the present disclosure. In this exemplary system, a user 302 is standing in front of a stereo camera 304 and a 3D display 320. Stereo camera 304 captures images of the user and transmits the images to the tracking modules in a virtual world client. The tracking modules include an eye tracker 312, a hand tracker 314, a head tracker 316, a body tracker 318, and an objects tracker 319. A calibrator 306 is also coupled to stereo camera 304 to perform the initial mapping of positions in the captured images to real-world positions. User movements and objects' state changes tracked by the tracking modules are fed to model combiner 307, which combines the output of the tracking modules and applies application-specific model to detect user-objects interactions. The detected user-objects interactions by model combiner 307 and position information generated by calibrator 306 are sent to an event generator 308. Event generator 308 transforms the interactions into an event stream which is relayed to a virtual world server. Next, a mapping module 310 in the virtual world server maps the real-world space back to the virtual space for displaying at 3D display 320.

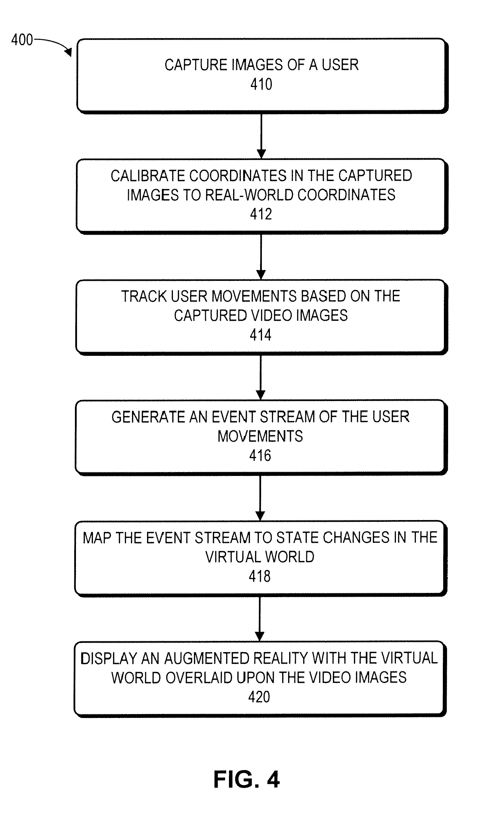

FIG. 4 presents a flow chart illustrating a method for facilitating interaction with objects via a machine vision interface in a virtual world displayed on a large stereo display in accordance with an embodiment of the present disclosure, which can be performed by a computer system (such as system 200 in FIG. 2 or system 300 in FIG. 3). During operation, the computer system captures images of a user (operation 410). The computer system then calibrates coordinates in the captured images to real-world coordinates (operation 412). Next, the computer system tracks user movements and objects state changes based on the captured video images (operation 414). Subsequently, the computer system generates an event stream of the user-objects interactions (operation 416). After mapping the event stream to the state changes in the virtual world (operation 418), the computer system displays an augmented reality with the virtual world overlaid upon the captured video images (operation 420).

In some embodiments of method 400, there may be additional or fewer operations. Moreover, the order of the operations may be changed, and/or two or more operations may be combined into a single operation.

### An Exemplary System

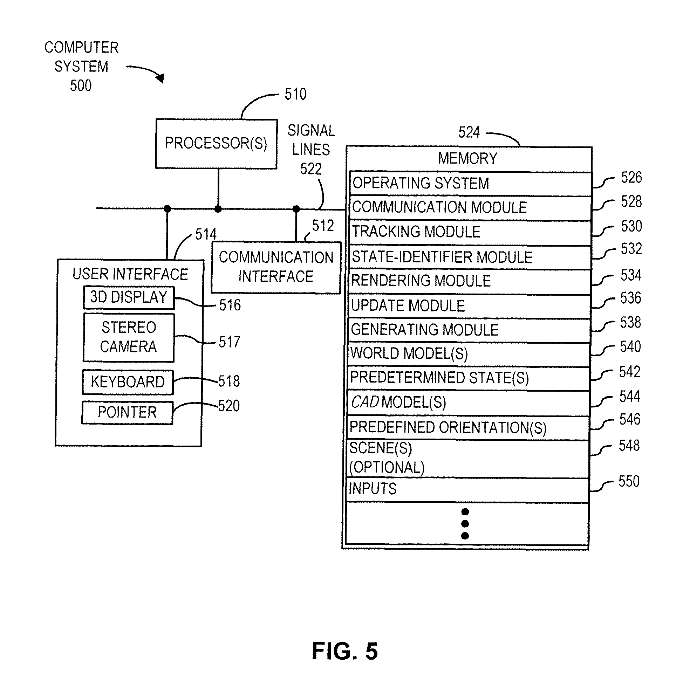

FIG. 5 presents a block diagram illustrating a computer system 500 that facilitates augmented-reality collaboration, in accordance with one embodiment of the present invention. This computer system includes one or more processors 510, a communication interface 512, a user interface 514, and one or more signal lines 522 coupling these components together. Note that the one or more processing units 510 may support parallel processing and/or multi-threaded operation, the communication interface 512 may have a persistent communication connection, and the one or more signal lines 522 may constitute a communication bus. Moreover, the user interface 514 may include: a 3D display 516, a stereo camera 517, a keyboard 518, and/or a pointer 520, such as a mouse.

Memory 524 in the computer system 500 may include volatile memory and/or non-volatile memory. Memory 524 may store an operating system 526 that includes procedures (or a set of instructions) for handling various basic system services for performing hardware-dependent tasks. In some embodiments, the operating system 526 is a real-time operating system. Memory 524 may also store communication procedures (or a set of instructions) in a communication module 528. These communication procedures may be used for communicating with one or more computers, devices and/or servers, including computers, devices and/or servers that are remotely located with respect to the computer system 500.

Memory 524 may also include multiple program modules (or sets of instructions), including: tracking module 530 (or a set of instructions), state-identifier module 532 (or a set of instructions), rendering module 534 (or a set of instructions), update module 536 (or a set of instructions), and/or generating module 538 (or a set of instructions). Note that one or more of these program modules may constitute a computer-program mechanism.

During operation, tracking module 530 receives one or more inputs 550 via communication module 528. Then, state-identifier module 532 determines a change to the state of one or more objects in one of world models 540. In some embodiments, inputs 550 include images of the physical objects, and state-identifier module 532 may determine the change to the state using one or more optional scenes 548, predefined orientations 546, and/or one or more *CAD* models 544. For example, rendering module 534 may render optional scenes 548 using the one or more *CAD* models 544 and predefined orientations 546, and state-identifier module 532 may determine the change to the state by comparing inputs 550 with optional scenes 548. Alternatively or additionally, state-identifier module 532 may determine the change in the state using predetermined states 542 of the objects. Based on the determined change(s), update module 536 may revise one or more of world models 540. Next, generating module 538 may generate instructions for a virtual world client and/or an augmented reality client based on one or more of world models 540. 5

## Claims

1. A system, comprising:
a stereo image-capturing device configured to capture images of a user;
a plurality of trackers configured to track movements of the user based on the captured images;
an event generator configured to generate an event stream associated with the user movements;
an event processor in a virtual-world client configured to map the event stream to state changes in the virtual world, wherein the event processor comprises a model combiner configured to combine output from the plurality of trackers based on one or more models of the user and/or the user's surroundings;
a virtual-reality application with a model of a real-world scene;
one or more three-dimensional (3D) displays configured to display a model of the real-world scene; and
one or more augmented-reality clients configured to display information overlaid on a video stream of the real-world scene.

2. The system of claim 1, wherein the stereo image-capturing device is a stereo camera capable of generating disparity maps for depth calculation.

3. The system of claim 1 or claim 2, further comprising a calibration module configured to map coordinates of a point in the captured images to coordinates of a real-world point.

4. The system of any of the preceding claims, further comprising a model-combination module configured to apply a kinematics model on the tracked movements for the event generator.

5. The system of any of the preceding claims, wherein the plurality of trackers include one or more of:
an eye tracker;
a head tracker;
a hand tracker;
a body tracker; and
an object tracker.

6. The system of any of the preceding claims, wherein the event processor is further configured to allow the user to manipulate an object corresponding to the user movements.

7. The system of claim 6, wherein the 3D display is further configured to display the object in response to user movements.

8. The system of any of the preceding claims, wherein the event processor is configured to receive a second event stream for manipulating an object.

9. A computer-implemented method, comprising:
capturing, by a computer, images of a user;
tracking movements of the user based on the captured images by a plurality of trackers;
generating an event stream associated with the user movements;
mapping the event stream to state changes in a virtual world;
combining output from the plurality of trackers based on one or more models of the user and/or the user's surroundings;
maintaining a model of a real-world scene;
displaying a model of the real-world scene and information overlaid on a video stream of the real-world scene using a three-dimensional (3D) display.

10. The method of claim 9, wherein capturing images of the user comprising generating disparity maps for depth calculation.

11. The method of claim 9 or claim 10, further comprising mapping coordinates of a point in the captured images to coordinates of a real-world point.

12. The method of any of claims 9 to 11, further comprising applying a kinematics model on the tracked movements for the generating of the event.

13. The method of any of claims 9 to 12, further comprising allowing the user to manipulate an object corresponding to the user movements, and preferably displaying the object in response to user movements.

14. The method of any of claims 9 to 13, further comprising receiving a second event stream for manipulating an object.

15. A non-transitory computer-readable storage medium storing instructions which when executed by one or more computers cause the computer(s) to execute a method according to any of claims 9 to 14.
